# EUROPEAN PATENT SPECIFICATION

(11) **EP 3 173 311 B1**
(45) Date of publication and mention of the grant of the patent: **02.05.2018**
(21) Application number: 15196711.4
(22) Date of filing: 27.11.2015
(51) Int. Cl.: B62D 1/22, B62D 5/09, B62D 5/093

(54) **HYDRAULIC STEERING**
HYDRAULISCHE LENKUNG
DIRECTION HYDRAULIQUE

(43) Date of publication of application: 31.05.2017
(73) Proprietor: Danfoss Power Solutions Aps, 6430 Nordborg (DK)
(72) Inventor: PETERSEN, Morten, Hoeck, 6230 Hellevad (DK); HANSEN, Niels Bjarne, 6200 Aabenraa (DK); PEDERSEN, Soren, 6430 Nordborg (DK); THOMSEN, Svend Erik, 6430 Nordborg (DK); HINSE, Jeroen, 6400 Sonderborg (DK); BAUER, Thomas, 6470 Sydals (DK); GOECE, Oktay, 24955 Harrislee (DE)
(74) Representative: Knoblauch, Andreas

(56) References cited:
- US-A1- 2010 051 376
- US-A1- 2011 197 983
- US-A1- 2015 175 194

## Description

The invention relates to a hydraulic steering comprising a hydraulic pressure supply port, a low pressure port, a steering unit valve, a switch valve, a hydraulic steering valve, a steering motor and a manual steering section, wherein the steering motor is supplied with pressurized hydraulic fluid by the hydraulic steering valve if the switch valve is in a first switch valve position, and wherein the steering motor is supplied with pressurized hydraulic fluid by the manual steering section via the steering unit valve if the switch valve is in a second switch valve position, wherein at least one pressure sensor is connected to the steering unit valve, wherein the at least one pressure sensor detects a pressure change in the steering unit valve due to a change in steering in the manual steering section.

Such a hydraulic steering unit according to the preamble of claim 1 is known, for example, from US 2011/0197983 A1.

A further hydraulic steering is, for example, known from DE 10 2006 010 695 B4. Vehicles equipped with such a hydraulic steering can either be steered via the hydraulic steering valve in an automatic mode or they can be steered via the manual steering section, for example using a steering means like a steering wheel.

When the vehicle is controlled via the hydraulic steering valve, the steering is performed automatically, for example by a control unit using satellite navigation. Such a functionality is, for example, important for agricultural vehicles.

While the switch valve responsible for changing from automatic steering to manual steering and vice versa can usually be directly controlled by the driver, it is nevertheless important for safety that the driver can also switch to manual steering by directly influencing the steering means, for example, turning a steering wheel.

To this end, in DE 10 2006 010 695 B1 a steering wheel sensor is provided that can detect if the steering wheel has been turned by the driver. Furthermore, disconnection valves are provided that ensure that the steering means is not turned during automatic steering mode, i.e. when the hydraulic steering is controlled by the hydraulic steering valve.

In DE 10 2004 021 531 B4 a further example of a hydraulic steering using such a sensor on the steering wheel is known.

However, the usage of a sensor on the steering wheel has the disadvantage that one either needs to ensure that the steering wheel is not automatically turned while the hydraulic steering valve controls the vehicle or a control unit has to distinguish between the automatic steering behavior of the steering means and a direct influence on the steering means by the driver. Furthermore, such sensors on the steering means are not always reliable and increase the costs of installation and maintenance of the hydraulic steering.

Consequently, the task of the present invention is to provide a hydraulic steering in which a switch from automatic steering to manual steering can be reliably ensured when the manual steering section is directly influenced by a driver, for example by turning a steering wheel.

According to the present invention the above task is solved in that the hydraulic steering comprises a control unit, wherein the control unit processes the pressure signal from the at least one pressure sensor by signal treatment with a filter wherein the unfiltered signal is compared to the sum of the filtered signal and a threshold parameter.

Such a solution has the advantage that a pressure sensor is easier to integrate into the hydraulic steering and often more reliable than a steering wheel sensor. However, it is of course possible to combine a steering wheel sensor with the present invention to have an additional fail safe. The steering unit valve can always be connected to the manual steering section to ensure that a pressure change in one of the hydraulic steering lines coming from the manual steering section can always reach the steering unit valve. The at least one pressure sensor can then, for example, detect a pressure change in one of the directional lines coming from the manual steering section. The at least one pressure sensor can transfer its signals to a control unit to determine when the switch valve needs to be switched to the second switch valve position. The threshold parameter can ensure that a switch from the first switch valve position to the second switch valve position will only occur when it is ensured that a change in steering in the manual steering section is an intentional change in steering. Furthermore, there will also be small pressure fluctuations which will be measured by the pressure sensor, because of which it needs to be ensured that a switch of valve position in the switch valve will not be triggered by a pressure fluctuation.

In a preferred embodiment the at least one pressure sensor is hydraulically connected to the manual steering section only if the switch valve is in the first switch valve position. In the first switch valve position the steering is already controlled by the manual steering section and therefore it is not necessary to hydraulically connect the at least one pressure sensor to the manual steering section in this case. This also ensures that no pressure change signals from the manual steering section are relayed from the at least one pressure sensor to the control unit in this case.

It is furthermore preferred if the hydraulic steering comprises a control unit, wherein the control unit processes a pressure signal from the at least one pressure sensor by signal treatment with a low pass filter.

It is furthermore preferred if the control unit sends a signal to the switch valve to change to the second switch valve position when the unfiltered pressure signal is larger than the sum of the filtered pressure signal and a threshold parameter.

It is preferred if at least one pressure sensor is connected to a spring chamber of the steering unit valve. In this embodiment one can easily ensure that the pressure sensor will detect a change in steering in the manual steering section by a pressure change due to a change in steering in the manual steering section. Directional lines of the manual steering section can to this end also be connected to the spring chamber of the steering unit valve at least when the hydraulic steering is in automatic steering mode, i.e. the switch valve is in the first switch valve position.

It is furthermore preferred if a three-way check valve is arranged in the hydraulic fluid path between at least one pressure sensor and the manual steering section. Since there are usually two directional lines coming from the manual steering section a change in steering in the manual steering section will usually only increase the pressure in one of the directional lines. A three-way check valve arranged in the hydraulic fluid path between at least one pressure sensor and the manual steering section can thus ensure that only the larger of the two pressures coming from the two directional lines will reach the pressure sensor. This way, it is not necessary to arrange one pressure sensor connected to each directional line.

In a preferred embodiment the manual steering section comprises a left directional line and a right directional line, that are both connected to the three-way check valve, such that only the hydraulic fluid with the higher pressure from the left directional line and the right directional line reaches the at least one pressure sensor.

It is furthermore preferred if the pressurized fluid from the three-way check valve reaches at least one pressure sensor without passing through the steering unit valve. In this embodiment one may ensure that an increase in pressure coming from the manual steering section can be detected by the pressure sensor with relatively low pressure losses. Thus one can ensure that a change in steering in the manual steering section can be earlier and more reliably detected.

It is furthermore preferred if one pressure sensor is connected to the spring chamber of the steering unit valve and another pressure sensor is connected to the low pressure port. In this embodiment one may dispense with complicated signal treatment and directly compare the signals of the two pressure sensors to detect a change in steering in the manual steering section.

In a further preferred embodiment the signals of the two pressure sensors are subtracted to determine if a change in steering in the manual steering section has occurred.

In another preferred embodiment the steering unit valve is connected to a second low pressure port. This embodiment ensures that unwanted pressure increases in the first low pressure port have a lower influence on the steering unit valve and thus the at least one pressure sensor is less influenced by spurious pressure signals.

It is furthermore preferred if the second low pressure port is not connected to the first low pressure port. This way, one can ensure that temporary pressure increases in the first low pressure port are not transferred to the second low pressure port.

It is preferred if a pressure shielding valve is arranged between the steering unit valve and the first low pressure port and/or the second low pressure port. Such a pressure shielding valve can additionally ensure that pressure increases that can be communicated via the first low pressure port are dampened before they reach the steering unit valve and in turn the pressure sensors.

It is furthermore preferred if the pressure shielding valve in a first pressure shielding valve position connects the steering unit valve to the first low pressure port and/or the second low pressure port via a smaller orifice than another orifice in a second pressure shielding valve position. This way, one may for example ensure that in case the switch valve is in the first switch valve position and the hydraulic steering is steered by the hydraulic steering valve the influences of varying pressures in the first and second low pressure ports are dampened compared to the situation when the switch valve is in the second switch valve position. This way, fluctuations and spurious pressure changes reaching the at least one pressure sensor are reduced whereby a change in steering in the manual steering section can be more easily detected by the at least one pressure sensor.

It is preferred if at least one disconnection valve is arranged between the steering unit valve and the steering motor, wherein the disconnection valve prevents an automatic turning of a steering means of the manual steering section if the switch valve is in the first switch valve position. Such a disconnection valve can therefore ensure that the steering means is not automatically turned while the switch valve is in the first switch valve position and the hydraulic steering is controlled by the hydraulic steering valve. Otherwise it would be difficult to distinguish between a manual turning of the steering means by the driver and a reaction of the manual steering section to pressure changes in the hydraulic steering due to the steering operation of the hydraulic steering valve.

Preferred embodiments of the invention will now be described with reference to the figures, wherein:
- Fig. 1: shows a hydraulic circuit diagram of a first embodiment of a hydraulic steering according to the invention,
- Fig. 2: shows another hydraulic circuit diagram of a hydraulic steering according to a second embodiment,
- Fig. 3: shows a third embodiment of a hydraulic steering according to the invention,
- Fig. 4: shows a fourth embodiment of a hydraulic steering according to the invention,
- Fig. 5: shows a fifth embodiment of a hydraulic steering according to the invention,
- Fig. 6: shows a sixth embodiment of a hydraulic steering according to the invention,
- Fig. 7: shows a seventh embodiment of a hydraulic steering according to the invention,
- Fig. 8: shows an eighth embodiment of a hydraulic steering according to the invention,
- Fig. 9: shows a signal treatment of a pressure signal according to the invention,
- Fig. 10: shows a ninth embodiment of a hydraulic steering according to the invention,
- Fig. 11: shows a tenth embodiment of a hydraulic steering according to the invention.

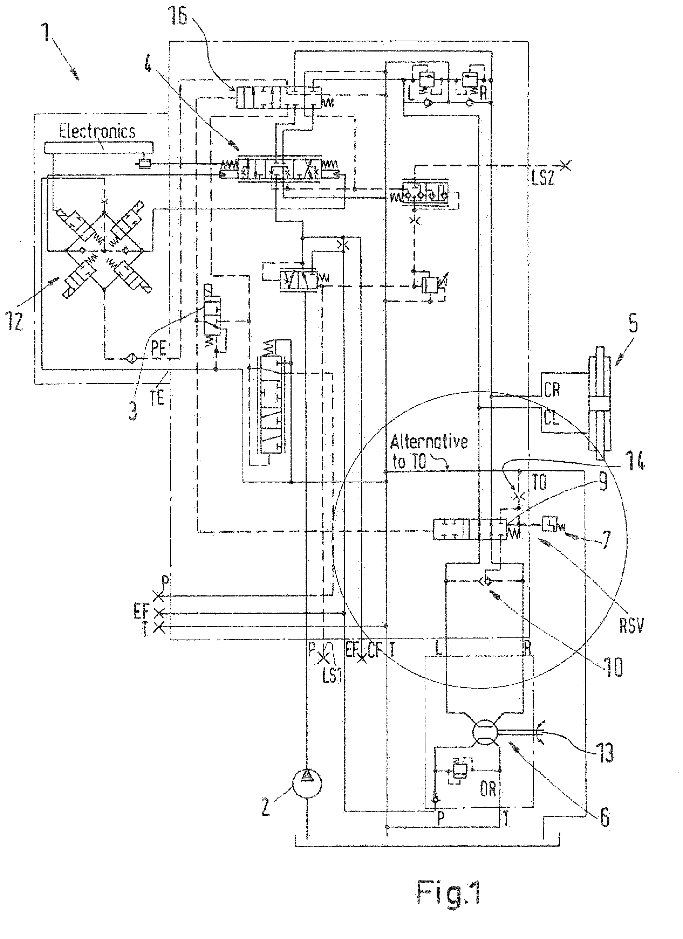

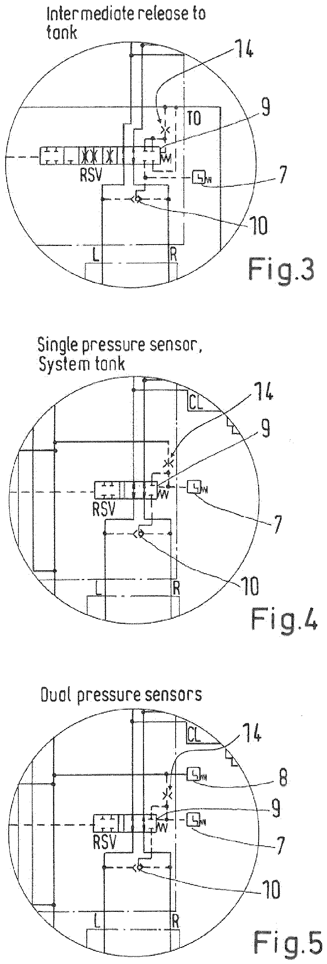

Fig. 1, 2 and 10 show first, second and ninth embodiments of the invention, respectively. The third to eighth and tenth embodiment shown in Fig. 3 to 8 and 11, are however only shown in partial hydraulic circuit diagrams, each of which can replace either circle in Fig. 1, 2 or 10 to give the resulting third to eighth or tenth embodiment.

Fig. 1 shows the first embodiment of a hydraulic steering 1 according to the invention comprising a hydraulic pressure port P connected to a pump 2 that increases the pressure of the hydraulic fluid coming from the tank.

Furthermore, the hydraulic steering 1 comprises a low pressure port T through which the hydraulic fluid can return to the tank after passing through the hydraulic steering 1. The hydraulic steering 1 furthermore comprises a switch valve 3 which may, for example, be a magnetic valve or another directly controllable valve.

In a first switch valve position of the switch valve 3 a steering motor 5 is supplied with pressurized hydraulic fluid by the hydraulic steering valve 4. The hydraulic steering valve 4 allows an automatic steering of the hydraulic steering, for example, when the vehicle is controlled with the help of satellite navigation. To this end the hydraulic steering valve 4 is a proportional valve that can be supplied with pressurized hydraulic fluid via a bridge circuit 12 that comprises four magnetic valves. A cut-off valve 16 allows to cut the fluid connections of the hydraulic steering valve 4 to the steering motor 5 when the hydraulic steering is in manual steering mode. This valve position of the cut-off valve 16 is shown in Fig. 1, 2 and 10.

When the switch valve 3 is in a second switch valve position the steering motor 5 is supplied with pressurized hydraulic fluid by a manual steering section 6 via a steering unit valve RSV. This situation is depicted in all Fig. 1 to 8, 10 and 11.

The manual steering section 6 comprises a manual steering means 13, for example, a steering wheel. Depending on how the steering means 13 is steered the pressure in one of two directional lines R, L is increased. The left and right directional lines L, R are connected to the steering unit valve RSV. In the shown valve position of the steering unit valve RSV the hydraulic steering is in manual steering mode, i.e. the directional lines R, L from the manual steering section 6 are connected to the steering motor 5.

In this embodiment a pressure sensor 7 is connected to the steering unit valve RSV. When the steering unit valve RSV is in the left valve position (not the currently shown valve position in Fig. 1) the directional lines L, R are blocked from a hydraulic connection to the steering motor 5. There is, however, a connection of the directional lines R, L via a three-way check valve 10 and the steering unit valve RSV to the pressure sensor 7 in this case. The three-way check valve ensures that only the hydraulic fluid with a higher pressure coming from either of the directional lines R, L is directed towards the pressure sensor 7. When the hydraulic steering 1 is in automatic steering mode and the hydraulic steering valve 4 controls the steering, it is thus possible to detect when the driver has changed the steering in the manual steering section via the pressure sensor 7. A control unit (which is not depicted) can then analyze the pressure signals and decide if the switch valve 3 should be switched to the second switch valve position such that the steering motor 5 will be supplied with pressurized hydraulic fluid by the manual steering section 6. An orifice 14 between the steering unit valve RSV and the low pressure port T and /or a second low pressure port T0 dampens pressure fluctuations in the steering unit valve RSV.

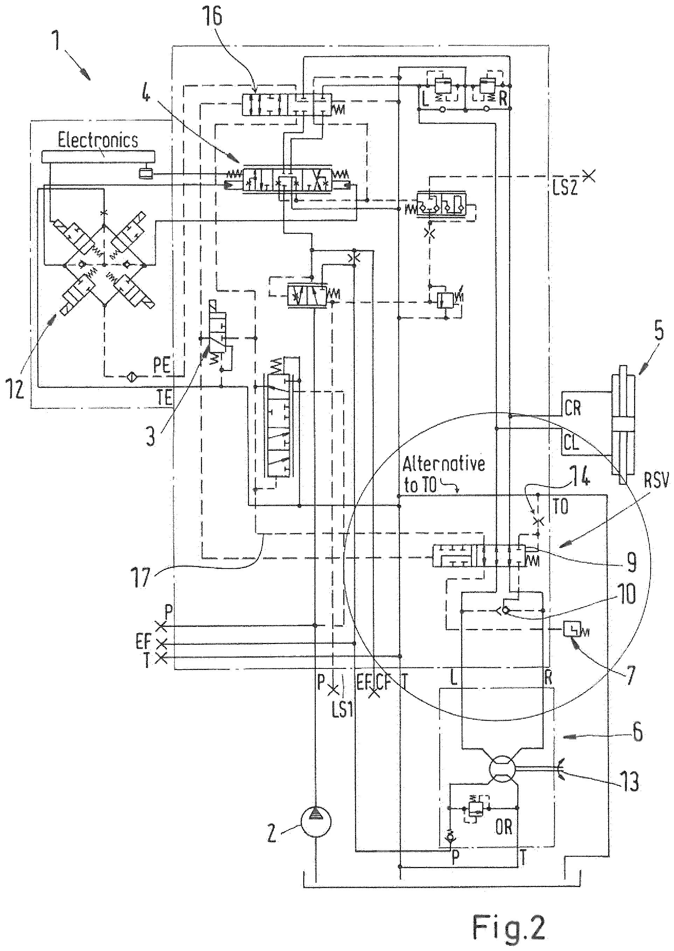

In Fig. 2 a slightly different embodiment from the first embodiment is shown. The second to eighth's embodiment mostly differ from the first embodiment in the encircled region which is why for Fig. 3 to 8 only the deviating encircled region is depicted. According to the first and second embodiment of Fig. 1 and 2 in addition to the low pressure port T a second low pressure port T0 is connected to the steering unit valve RSV. Thereby, unwanted pressure increases in the low pressure port T can be reduced which could otherwise influence the pressure sensor 7 coming from the low pressure port T and, for example, hydraulic steering valve 4. According to the embodiments in Fig. 1 and 2 the low pressure port T is however connected to the second low pressure port T0 by an alternative fluid line denoted with "alternative to T0" in Fig. 1 and 2.

The second embodiment of Fig. 2 differs from the first embodiment in the placement of the pressure sensor 7. Here the pressure sensor 7 is not connected to the spring chamber 9 but is connected to an auxiliary port of the steering unit valve RSV. When the steering unit valve RSV is in the left valve position as shown in Fig. 2 (meaning the hydraulic steering 1 is in automatic steering mode controlled by the hydraulic steering valve 4) the auxiliary port connected to the pressure sensor 7 is connected to the three-way check valve 10. Consequently, one can ensure that only when the hydraulic steering 1 is controlled by the hydraulic steering valve 4 and the switch valve is thus in the first switch valve position the pressure sensor 7 will be connected to the manual steering section 6.

The second embodiment furthermore differs from the first embodiment in that the steering unit valve RSV connects the pressure sensor 7 with the cut-off valve 16 via a diagnostic line 17 when the steering unit valve RSV connects the manual steering section 6 with the steering motor 5. This has the advantage that the pressure sensor 7 also allows to determine in which valve position the steering unit valve RSV currently is in. This is advantageous since the steering unit valve RSV is usually not a directly controlled valve but a hydraulically controlled valve which may due to a malfunction remain stuck in a faulty valve position. Consequently, the pressure sensor 7 in this embodiment has an additional safety function.

Fig. 3 shows a third embodiment according to the invention. Here the steering unit valve RSV has three valve positions. In the currently shown valve position the manual steering section 6 is connected to the steering motor 5 for manual control. However, the steering unit valve RSV can also be put in the middle valve position where there is a throttled connection between the left and right directional lines R, L to the steering motor 5. The steering unit valve RSV also has a third valve position (the left one as depicted in Fig. 3) in which the connection of the directional lines R, L to the steering motor 5 is shut off and only the three-way check valve 10 connects the directional lines R, L with the pressure sensor 7.

Fig. 4 shows a fourth embodiment according to the invention. In contrast to the previous three embodiments there is no second low pressure port T0 connected to the steering unit valve RSV. Apart from this the fourth embodiment is identical to the first embodiment.

Fig. 5 shows a fifth embodiment according to the invention. In this case two pressure sensors 7, 8 are connected to the steering unit valve RSV. When the steering unit valve RSV is in the left shown valve position the manual steering section 6 will be connected via the directional lines R, L and the three-way check valve 10 with the spring chamber 9 of the steering unit valve RSV as well as the pressure sensor 7. The first pressure sensor 7 here therefore can also sense a change in steering in the manual steering section 6. The second pressure sensor 8 is primarily connected to the low pressure port 10. There is, however, also a fluid connection to the spring chamber 9 and the first pressure sensor 7, this fluid connection is however throttled by an orifice 13, whereby a pressure difference between the first pressure sensor 7 and the second pressure sensor 8 can be maintained. Thereby a pressure increase in the spring chamber 9 can be detected by a pressure increase through the first pressure sensor 7 as compared to the second pressure sensor 8. The second pressure sensor 8 should measure the pressure in the low pressure port T which is ideally constant. However, as discussed earlier, the pressure in the low pressure port T can vary due to pressure influences from the hydraulic steering valve 4 and other connected valves. However, by calculating the difference between the first pressure sensor 7 and the second pressure sensor 8 one can in this embodiment still detect a change in steering in the manual steering section by a pressure increase in either one of the directional lines R, L.

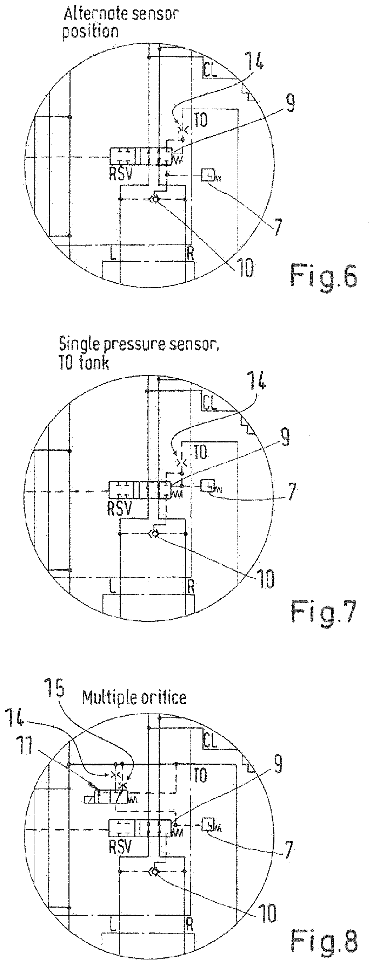

Fig. 6 shows a sixth embodiment of a hydraulic steering 1 according to the invention. This embodiment as well as a seventh embodiment according to Fig. 7 differ from the previous embodiments in that the steering unit valve RSV is only connected to the second low pressure port T0 and not to the first low pressure port T. Thereby, pressure variations communicated through the first low pressure port T do not influence the pressure measurement of the pressure sensor 7. Furthermore, according to the sixth embodiment the pressure sensor 7 is arranged between the steering unit valve RSV and the three-way check valve 10. Thereby, a clearer signal of a change in steering from the three-way check valve 10 and the manual steering section 6 can be achieved by the pressure sensor 7.

Fig. 7 shows a seventh embodiment according to the present invention. The seventh embodiment mostly coincides with the first embodiment, except for the difference that there is no connection between the first low pressure port T and the second low pressure port T0. The steering unit valve RSV is thus also not connected to the first low pressure port T.

Fig. 8 shows an eighth embodiment according to the present invention. Therein a pressure shielding valve 11 is arranged between the steering unit valve RSV and the first low pressure port T and the second low pressure port T0. However, the pressure shielding valve 11 could also be arranged just between the first low pressure port T and the steering unit valve RSV or between the steering unit valve RSV and the second low pressure port T0. The pressure shielding valve 11 in a first pressure shielding valve position connects the steering unit valve RSV to the first low pressure port T and/or the second low pressure port T0 via a smaller orifice 14 than in a second pressure shielding valve position (orifice 15). This is depicted by the two lines connecting the pressure shielding valve 11 to the first low pressure port T and the second low pressure port T0.

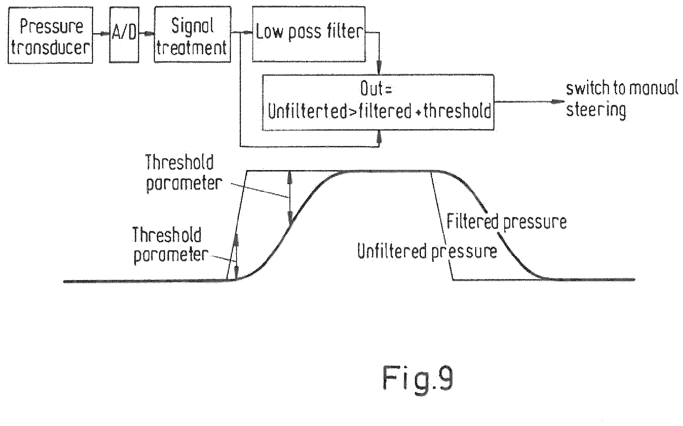

Fig. 9 shows a signal treatment of a pressure signal as used in the present invention. The hydraulic steering 1 to this end comprises a control unit (not shown in the figures) that processes the pressure signals from the at least one pressure sensor 7, 8. The signal treatment may, for example, be done by a low pass filter, wherein the unfiltered signal is then compared to the sum of the filtered signal and a threshold parameter. Of course, other filtering methods instead of a low pass filter could also be used. Preferably the control unit sends a signal to the switch valve 3 to change to the second switch valve position when the unfiltered pressure signal is larger than the sum of the filtered pressure signals and a threshold parameter. The threshold parameter here ensures that pressure fluctuations that can, for example, be transferred via the low pressure port T do not result in a spurious pressure signal that could result in a switch of the switch valve positions although no change in steering in the manual steering section 6 has occurred. This signal treatment therefore improves the reliability and safety of the present invention in particular in case the low pressure port T is connected to the steering unit valve RSV which in some applications may still be advantageous for other reasons.

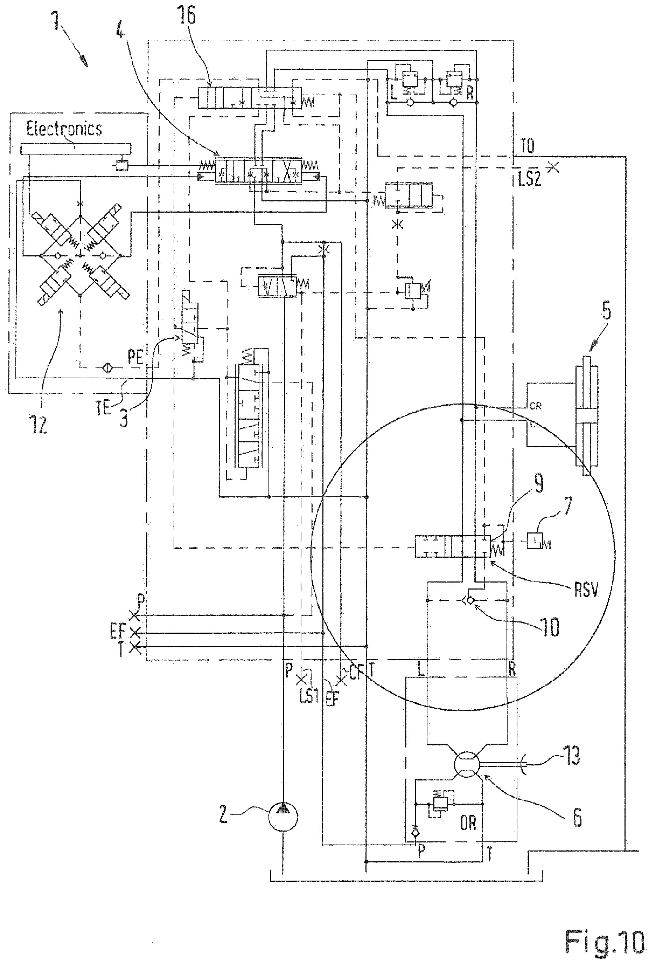

Fig. 10 shows a ninth embodiment of a hydraulic steering 1 according to the invention. According to this embodiment the pressure sensor 7 is always connected to the spring chamber 9 of the steering unit valve RSV similar to the fourth and fifth embodiment. However, in this embodiment there is no direct connection of the steering unit valve RSV either to the first low pressure port T or the second low pressure port T0.

This embodiment, however, has an additional safety function which allows to change the valve position of the cut-off valve 16 due to a change of steering in the manual steering section 6. To this end, the steering unit valve RSV connects the manual steering section 6 with the spring chamber of the cut-off valve 16 when the steering unit valve RSV does not connect the manual steering section 6 to the steering motor 5. This situation corresponds to the left valve position of the steering unit valve RSV as shown in Fig. 10. Thereby, the driver can create a sufficiently large pressure by influencing the manual steering section 16 to switch from automatic steering to manual steering. This increases the safety of the hydraulic steering 1 because even if one of the pressure sensors or the electronics fail to detect the change in steering in the manual steering section 6 the pressure created by the change in the manual steering section 6 can by itself result in a switch from automatic steering to manual steering.

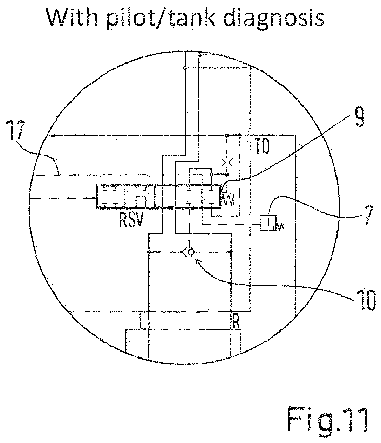

Fig. 11 shows a tenth embodiment of a hydraulic steering 1 according to the invention. This embodiment has a similar functionality to the second embodiment in that the pressure sensor 7 can also be used to detect the valve position of the steering unit valve RSV. To this end, the pressure sensor 7 in the manual steering mode is connected via the steering unit valve RSV to the switch valve 3 as well as the cut-off valve 16 via the diagnostic line 17.

In this embodiment the pressure sensor 7 is only indirectly connected to the manual steering section 6 when the steering unit valve RSV does not connect the manual steering section 6 to the steering motor 5. In this case the pressure sensor 7 is connected to the first low pressure port T as well as the second low pressure port T0 at the same time as the manual steering section 6. Thereby a change in steering in the manual steering section 6 will result in a pressure increase that is transmitted via the three-way check valve 10 through the steering unit valve RSV to the first low pressure port T as well as the second low pressure port T0 and thus also reaches the pressure sensor 7.

## Claims

1. A hydraulic steering (1) comprising a hydraulic pressure supply port (P), a low pressure port (T), a steering unit valve (RSV), a switch valve (3), a hydraulic steering valve (4), a steering motor (5) and a manual steering section (6), wherein the steering motor (5) is supplied with pressurized hydraulic fluid by the hydraulic steering valve (4) if the switch valve (3) is in a first switch valve position, and wherein the steering motor (5) is supplied with pressurized hydraulic fluid by the manual steering section (6) via the steering unit valve (RSV) if the switch valve (3) is in a second switch valve position, at least one pressure sensor (7, 8) is connected to the steering unit valve (RSV), wherein at least one pressure sensor (7, 8) detects a pressure change in the steering unit valve (RSV) due to a change in steering in the manual steering section (6), **characterized in that** the hydraulic steering (1) comprises a control unit, wherein the control unit processes the pressure signal from the at least one pressure sensor (7, 8) by signal treatment with a filter wherein the unfiltered signal is compared to the sum of the filtered signal and a threshold parameter.

2. The hydraulic steering (1) according to claim 1, **characterized in that** the at least one pressure sensor (7, 8) is hydraulically connected to the manual steering section (6) only if the switch valve (3) is in the first switch valve position.

3. The hydraulic steering (1) according to claim 1 or 2, **characterized in that** the control unit processes the pressure signal from the at least one pressure sensor (7, 8) by signal treatment with a low pass filter.

4. The hydraulic steering (1) according to claim 3, **characterized in that** the control unit sends a signal to the switch valve (3) to change to the second switch valve position when the unfiltered pressure signal is larger than the sum of the filtered pressure signal and the threshold parameter.

5. The hydraulic steering (1) according to any of claims 1 to 4, **characterized in that** at least one pressure sensor (7, 8) is connected to a spring chamber (9) of the steering unit valve (RSV).

6. The hydraulic steering (1) according to any of claims 1 to 5, **characterized in that** a three-way check valve (10) is arranged in the hydraulic fluid path between at least one pressure sensor (7, 8) and the manual steering section (6).

7. The hydraulic steering (1) according to claim 6, **characterized in that** the manual steering section (6) comprises a left directional line (L) and a right directional line (R) that are both connected to the three-way check valve (10) such that only the hydraulic fluid with the higher pressure from the left directional line (L) and the right directional line (R) reaches the at least one pressure sensor (7, 8).

8. The hydraulic steering (1) according to claim 6 or 7, **characterized in that** the pressurized fluid from the three-way check valve (10) reaches at least one pressure sensor (7, 8) without passing through the steering unit valve (RSV).

9. The hydraulic steering (1) according to any of claims 5 to 8, **characterized in that** one pressure sensor (7) is connected to the spring chamber (9) of the steering unit valve (RSV) and another pressure sensor (8) is connected to the low pressure port (T).

10. The hydraulic steering (1) according to any of claims 1 to 9, **characterized in that** the signals of two pressure sensors (7, 8) are subtracted to determine if a change in steering in the manual steering section (6) has occurred.

11. The hydraulic steering (1) according to any of claims 1 to 10, **characterized in that** the steering unit valve (RSV) is connected to a second low pressure port (T0).

12. The hydraulic steering (1) according to claim 11, **characterized in that** the second low pressure port (T0) is not connected to the first low pressure port (T).

13. The hydraulic steering (1) according to any of claims 1 to 12, **characterized in that** a pressure shielding valve (11) is arranged between the steering unit valve (RSV) and the first low pressure port (T) and/or the second low pressure port (T0).

14. The hydraulic steering (1) according to claim 13, **characterized in that** the pressure shielding valve (11) in a first pressure shielding valve position connects the steering unit valve (RSV) to the first low pressure port (T) and/or the second low pressure port (T0) via a smaller orifice (14) than another orifice (15) in a second pressure shielding valve position.

15. The hydraulic steering (1) according to any of claims 1 to 14, **characterized in that** at least one disconnection valve is arranged between the steering unit valve (RSV) and the steering motor (5), that prevents an automatic turning of a steering means of the manual steering section if the switch valve (3) is in the first switch valve position.

## Patentansprüche

1. Hydraulische Lenkung (1), die einen Hydraulikdruckversorgungsanschluss (P), einen Niederdruckanschluss (T), ein Lenkeinheitenventil (RSV), ein Umschaltventil (3), ein Hydrauliklenkungsventil (4), einen Lenkmotor (5) und einen Handlenkabschnitt (6) umfasst, wobei der Lenkmotor (5) durch das Hydrauliklenkungsventil (4) mit einem unter Druck stehenden Hydraulikmedium versorgt wird, wenn sich das Umschaltventil (3) in einer ersten Umschaltventilstellung befindet, und wobei der Lenkmotor (5) durch den Handlenkabschnitt (6) über das Lenkeinheitenventil (RSV) mit einem unter Druck stehenden Hydraulikmedium versorgt wird, wenn sich das Umschaltventil (3) in einer zweiten Umschaltventilstellung befindet, wobei wenigstens ein Drucksensor (7, 8) mit dem Lenkeinheitenventil (RSV) verbunden ist, wobei wenigstens ein Drucksensor (7, 8) auf Grund einer Änderung der Lenkung in dem Handlenkabschnitt (6) eine Druckänderung in dem Lenkeinheitenventil (RSV) erkennt, **dadurch gekennzeichnet, dass** die hydraulische Lenkung (1) eine Steuereinheit umfasst, wobei die Steuereinheit das von dem wenigstens einen Drucksensor (7, 8) kommende Drucksignal durch eine Signalverarbeitung mit einem Filter verarbeitet, wobei das ungefilterte Signal mit der Summe aus dem gefilterten Signal und einem Schwellenwertparameter verglichen wird.

2. Hydraulische Lenkung (1) nach Anspruch 1, **dadurch gekennzeichnet, dass** der wenigstens eine Drucksensor (7, 8) nur dann mit dem Handlenkabschnitt (6) hydraulisch verbunden ist, wenn sich das Umschaltventil (3) in der ersten Umschaltventilstellung befindet.

3. Hydraulische Lenkung (1) nach Anspruch 1 oder 2, **dadurch gekennzeichnet, dass** die Steuereinheit das von dem wenigstens einen Drucksensor (7, 8) kommende Drucksignal durch eine Signalverarbeitung mit einem Tiefpassfilter verarbeitet.

4. Hydraulische Lenkung (1) nach Anspruch 3, **dadurch gekennzeichnet, dass** die Steuereinheit ein Signal an das Umschaltventil (3) sendet, um in die zweite Umschaltventilstellung umzuschalten, wenn das ungefilterte Drucksignal größer als die Summe aus dem gefilterten Drucksignal und dem Schwellenwertparameter ist.

5. Hydraulische Lenkung (1) nach einem der Ansprüche 1 bis 4, **dadurch gekennzeichnet, dass** wenigstens ein Drucksensor (7, 8) mit einer Federkammer (9) des Lenkeinheitenventils (RSV) verbunden ist.

6. Hydraulische Lenkung (1) nach einem der Ansprüche 1 bis 5, **dadurch gekennzeichnet, dass** ein Dreiwegerückschlagventil (10) in dem Hydraulikmediumweg zwischen wenigstens einem Drucksensor (7, 8) und dem Handlenkabschnitt (6) angeordnet ist.

7. Hydraulische Lenkung (1) nach Anspruch 6, **dadurch gekennzeichnet, dass** der Handlenkabschnitt (6) eine linke Richtungslinie (L) und eine rechte Richtungslinie (R) umfasst, die beide auf eine solche Weise mit dem Dreiwegerückschlagventil (10) verbunden sind, dass nur das Hydraulikmedium mit dem höheren Druck von der linken Richtungslinie (L) und der rechten Richtungslinie (R) den wenigstens einen Drucksensor (7, 8) erreicht.

8. Hydraulische Lenkung (1) nach Anspruch 6 oder 7, **dadurch gekennzeichnet, dass** das von dem Dreiwegerückschlagventil (10) kommende unter Druck stehende Medium wenigstens einen Drucksensor (7, 8) erreicht, ohne durch das Lenkeinheitenventil (RSV) zu strömen.

9. Hydraulische Lenkung (1) nach einem der Ansprüche 5 bis 8, **dadurch gekennzeichnet, dass** ein Drucksensor (7) mit der Federkammer (9) des Lenkeinheitenventils (RSV) verbunden ist und ein anderer Drucksensor (8) mit dem Niederdruckanschluss (T) verbunden ist.

10. Hydraulische Lenkung (1) nach einem der Ansprüche 1 bis 9, **dadurch gekennzeichnet, dass** die Signale der zwei Drucksensoren (7, 8) subtrahiert werden, um zu bestimmen, ob eine Änderung der Lenkung in dem Handlenkabschnitt (6) stattgefunden hat.

11. Hydraulische Lenkung (1) nach einem der Ansprüche 1 bis 10, **dadurch gekennzeichnet, dass** das Lenkeinheitenventil (RSV) mit einem zweiten Niederdruckanschluss (T0) verbunden ist.

12. Hydraulische Lenkung (1) nach Anspruch 11, **dadurch gekennzeichnet, dass** der zweite Niederdruckanschluss (T0) nicht mit dem ersten Niederdruckanschluss (T) verbunden ist.

13. Hydraulische Lenkung (1) nach einem der Ansprüche 1 bis 12, **dadurch gekennzeichnet, dass** ein Druckabschirmventil (11) zwischen dem Lenkeinheitenventil (RSV) und dem ersten Niederdruckanschluss (T) und/oder dem zweiten Niederdruckanschluss (T0) angeordnet ist.

14. Hydraulische Lenkung (1) nach Anspruch 13, **dadurch gekennzeichnet, dass** das Druckabschirmventil (11) in einer ersten Druckabschirmventilstellung das Lenkeinheitenventil (RSV) mit dem ersten Niederdruckanschluss (T) und/oder dem zweiten Niederdruckanschluss (T0) über eine Blende (14) verbindet, die kleiner als eine andere Blende (15) in einer zweiten Druckabschirmventilstellung ist.

15. Hydraulische Lenkung (1) nach einem der Ansprüche 1 bis 14, **dadurch gekennzeichnet, dass** wenigstens ein Trennventil zwischen dem Lenkeinheitenventil (RSV) und dem Lenkmotor (5) angeordnet ist, das eine automatische Drehung eines Lenkmittels des Handlenkabschnitts verhindert, wenn sich das Umschaltventil (3) in der ersten Umschaltventilstellung befindet.

## Revendications

1. Direction hydraulique (1) comprenant un orifice d'alimentation en pression hydraulique (P), un orifice basse pression (T), une soupape d'unité de direction (RSV), une soupape de commutation (3), une soupape de direction hydraulique (4), un moteur de direction (5) et une section de direction manuelle (6), le moteur de direction (5) étant alimenté en fluide hydraulique sous pression par la soupape de direction hydraulique (4) si la soupape de commutation (3) est dans une première position de soupape de commutation, et le moteur de direction (5) étant alimenté en fluide hydraulique sous pression par la section de direction manuelle (6) par l'intermédiaire de la soupape d'unité de direction (RSV) si la soupape de commutation (3) est dans une seconde position de soupape de commutation, au moins un capteur de pression (7, 8) étant relié à la soupape d'unité de direction (RSV), au moins un capteur de pression (7, 8) détectant un changement de pression dans la soupape d'unité de direction (RSV) dû à un changement de direction dans la section de direction manuelle (6), **caractérisée en ce que** la direction hydraulique (1) comprend une unité de commande, l'unité de commande traitant le signal de pression provenant de l'au moins un capteur de pression (7, 8) par un traitement de signal avec un filtre, le signal non filtré étant comparé à la somme du signal filtré et à un paramètre de seuil.

2. Direction hydraulique (1) selon la revendication 1, **caractérisée en ce que** l'au moins un capteur de pression (7, 8) est relié de façon hydraulique à la section de direction manuelle (6) uniquement si la soupape de commutation (3) est dans la première position de soupape de commutation.

3. Direction hydraulique (1) selon la revendication 1 ou 2, **caractérisée en ce que** l'unité de commande traite le signal de pression provenant de l'au moins un capteur de pression (7, 8) par un traitement de signal avec un filtre passe-bas.

4. Direction hydraulique (1) selon la revendication 3, **caractérisée en ce que** l'unité de commande envoie un signal à la soupape de commutation (3) pour passer à la seconde position de soupape de commutation lorsque le signal de pression non filtré est supérieur à la somme du signal de pression filtré et du paramètre de seuil.

5. Direction hydraulique (1) selon l'une quelconque des revendications 1 à 4, **caractérisée en ce qu'**au moins un capteur de pression (7, 8) est relié à une chambre d'aspiration (9) de la soupape d'unité de direction (RSV).

6. Direction hydraulique (1) selon l'une quelconque des revendications 1 à 5, **caractérisée en ce qu'**un clapet anti-retour à trois voies (10) est disposé dans le chemin de fluide hydraulique entre au moins un capteur de pression (7, 8) et la section de direction manuelle (6).

7. Direction hydraulique (1) selon la revendication 6, **caractérisée en ce que** la section de direction manuelle (6) comprend une conduite directionnelle gauche (L) et une conduite directionnelle droite (R) qui sont toutes les deux reliées au clapet anti-retour à trois voies (10) de sorte que seul le fluide hydraulique ayant la pression la plus élevée provenant de la conduite directionnelle gauche (L) et de la conduite directionnelle droite (R) atteigne l'au moins un capteur de pression (7, 8).

8. Direction hydraulique (1) selon la revendication 6 ou 7, **caractérisée en ce que** le fluide sous pression provenant du clapet anti-retour à trois voies (10) atteint au moins un capteur de pression (7, 8) sans passer à travers la soupape d'unité de direction (RSV).

9. Direction hydraulique (1) selon l'une quelconque des revendications 5 à 8, **caractérisée en ce qu'**un capteur de pression (7) est relié à une chambre d'aspiration (9) de la soupape d'unité de direction (RSV) et un autre capteur de pression (8) est relié à l'orifice basse pression (T).

10. Direction hydraulique (1) selon l'une quelconque des revendications 1 à 9, **caractérisée en ce que** les signaux de deux capteurs de pression (7, 8) sont soustraits pour déterminer si un changement de direction dans la section de direction manuelle (6) est survenu.

11. Direction hydraulique (1) selon l'une quelconque des revendications 1 à 10, **caractérisée en ce que** la soupape d'unité de direction (RSV) est reliée à un second orifice basse pression (T0).

12. Direction hydraulique (1) selon la revendication 11, **caractérisée en ce que** le second orifice basse pression (T0) n'est pas relié au premier orifice basse pression (T).

13. Direction hydraulique (1) selon l'une quelconque des revendications 1 à 12, **caractérisée en ce qu'**une soupape de protection contre la pression (11) est disposée entre la soupape d'unité de direction (RSV) et le premier orifice basse pression (T) et/ou le second orifice basse pression (T0).

14. Direction hydraulique (1) selon la revendication 13, **caractérisée en ce que** la soupape de protection contre la pression (11) dans une première position de soupape de protection contre la pression relie la soupape d'unité de direction (RSV) au premier orifice basse pression (T) et/ou au second orifice basse pression (T0) par l'intermédiaire d'un orifice (14) plus petit qu'un autre orifice (15) dans une seconde position de soupape de protection contre la pression.

15. Direction hydraulique (1) selon l'une quelconque des revendications 1 à 14, **caractérisée en ce qu'**au moins une soupape de déconnexion est disposée entre la soupape d'unité de direction (RSV) et le moteur de direction (5), et empêche la rotation automatique d'un moyen de direction de la section de direction manuelle si la soupape de commutation (3) est dans la première position de soupape de commutation.
